# EUROPÄISCHE PATENTSCHRIFT

(11) **EP 1 643 216 B1**
(45) Veröffentlichungstag und Bekanntmachung des Hinweises auf die Patenterteilung: **16.09.2009**
(21) Anmeldenummer: 05010106.2
(22) Anmeldetag: 10.05.2005
(51) Int. Cl.: G01D 5/347

(54) **Verfahren zur Herstellung und Montage eines Körpers mit einer Winkelskalierung**
Method for the fabrication and mounting of a body with an angular scale
Procédé de fabrication et de montage d'un corps avec une échelle angulair

(30) Priorität: 29.09.2004 DE 102004047083
(43) Veröffentlichungstag der Anmeldung: 05.04.2006
(73) Patentinhaber: Dr. Johannes Heidenhain GmbH, 83292 Traunreut (DE)
(72) Erfinder: Brandl, Sebastian, 83352 Altenmarkt (DE); Hertenberger, Jürgen, 84155 Bodenkirchen (DE)

(56) Entgegenhaltungen:
- EP-A- 0 913 669
- WO-A-20/04008076
- DE-A1- 10 019 499
- US-B1- 6 481 115
- PATENT ABSTRACTS OF JAPAN Bd. 2000, Nr. 25, 12. April 2001 (2001-04-12) & JP 2001 227990 A (SEIKO INSTRUMENTS INC), 24. August 2001 (2001-08-24)

## Beschreibung

Die Erfindung betrifft ein Verfahren zur Herstellung und Montage eines Körpers mit einer Winkelskalierung gemäß dem Anspruch 1, wie er insbesondere als Maßverkörperung in Winkelmesssystemen einsetzbar ist.

Derartige Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei Pick-and-Place-Maschinen von großer Bedeutung. Bei Werkzeugmaschinen ist insbesondere die absolute Genauigkeit der Messergebnisse eines Winkelmesssystems entscheidend. Häufig sind Winkelmesssysteme derart ausgestaltet, dass diese keine eigene Lagerung der relativ zueinander drehbaren Bauteile aufweisen.

Die Genauigkeit einer Winkelmessung wird wesentlich durch die Güte der Winkelskalierung, die Exzentrizität der Winkelskalierung zur Lagerung und durch die Rundlauf-Abweichung der Lagerung beeinflusst. Insbesondere ist bei Winkelmesssystemen ohne Eigenlagerung mit Abweichungen aufgrund zu großer Montageabweichungen zu rechnen.

In der Offenlegungsschrift DE 100 19 499 A ist ein Verfahren zum Herstellen einer Winkelskalierung für ein Winkelmesssystem offenbart, bei welchem die Exzentrizität des Körpers, auf den die Winkelskalierung aufzubringen ist, gemessen wird. Entsprechend den Messergebnissen wird dann eine Korrektur vorgenommen, so dass eine korrigierte Winkelskalierung aufgebracht wird.

Dieses bekannte Verfahren weist den Nachteil auf, dass es relativ aufwändig ist, und nachträglich eine direkte Montage auf ein Maschinenteil, dessen Winkelstellung zu bestimmen ist, praktisch nicht möglich ist.

In der internationalen Offenlegungsschrift WO 2004/008076 A1 wird eine Vorrichtung mit einem Zwischenring zur Montage eines Körpers mit einer Winkelskalierung gezeigt. Diese Vorrichtung hat unter anderem den Nachteil, dass eine exakte Montage des Körpers mit der Winkelskalierung vergleichsweise schwierig und aufwändig ist.

Gemäß der EP 0 913 669 A2 sind auch Zentrierverfahren bekannt, bei denen bei der Montage des Körpers mit der Winkelskalierung durch federnde Elemente eine Selbstzentrierung des Körpers erfolgen soll. Die Genauigkeit der Zentrierung wird bei diesen Systemen durch die Reproduzierbarkeit der Federwege bestimmt. Die genaue Wiederholbarkeit der Federwege wird aber je nach Material des Federelements z. B. bei Temperaturschwankungen ungünstig beeinflusst.

Die Körper mit der Winkelskalierung weisen fertigungsbedingt zwangsläufig Rundheitsabweichungen auf. Bisher wurden häufig diese Rundheitsabweichungen an vielen Prüfpunkten entlang der Außenkontur des Körpers erfasst. Danach wurde der Mittelpunkt des Kreises der kleinsten Abweichungsquadrate berechnet. Für das Aufbringen der Winkelskalierung wurde der Körper so ausgerichtet, dass dieser berechnete Mittelpunkt möglichst genau auf der Drehachse der Trägervorrichtung zu liegen kommt. Diese Art der Ausrichtung bzw. Montage ist vergleichsweise schwierig und aufwändig. Bei der späteren Montage des mit der Winkelskalierung versehenen Körpers an ein Maschinenteil musste der besagte Mittelpunkt wieder in einem aufwändigen Ablauf genau auf die Drehachse des betreffenden Maschinenteils zentriert werden. Nachdem derartige Winkelmesssysteme, z. B. durch verbesserte Abtastungstechniken und Interpolationselektroniken, prinzipiell immer genauere Messungen erlauben, mussten die Anbautoleranzen reduziert werden, um das Potenzial der Winkelmesssysteme auszuschöpfen. Zur Erhöhung der Zentriergenauigkeit wurde deshalb fortwährend die Genauigkeit der Ermittlung des Mittelpunkts des Kreises der kleinsten Abweichungsquadrate gesteigert, indem die Anzahl der Prüfpunkte erhöht wurde, was allerdings wiederum den Herstellungs- und Montageaufwand steigert.

Der Erfindung liegt die Aufgabe zugrunde, ein Verfahren zur Herstellung und Montage eines Körpers mit einer Winkelskalierung zu schaffen, welches sich insbesondere dadurch auszeichnet, dass ein überaus präziser Anbau möglich ist, bei vergleichsweise geringem Herstellungs- und Montageaufwand.

Diese Aufgabe wird durch ein Verfahren gemäß Anspruch 1 gelöst. Demnach werden zunächst auf einen vorzugsweise rotationssymmetrischen Körper mindestens drei Markierungen aufgebracht, die in Umfangsrichtung des Körpers voneinander beabstandet angeordnet werden. Danach wird der Körper bezüglich einer Trägervorrichtung (z. B. einem Rundtisch) ausgerichtet, bzw. justiert, so dass die Abstände zwischen den Markierungen und einem Punkt, welcher in Bezug auf die Trägervorrichtung ortsfest ist und auf deren Drehachse liegt, gleich groß sind. Sobald diese Justierung abgeschlossen ist, kann eine Winkelskalierung auf den Körper aufgebracht werden. Danach kann der Körper aus der Trägervorrichtung demontiert werden und ist beispielsweise für einen späteren Versand fertig gestellt. Der mit der Winkelskalierung versehene Körper kann nunmehr an ein Maschinenteil, z. B. eine Welle, montiert werden, dessen Drehstellung gemessen werden soll. Zu diesem Zweck wird der Körper wieder derart räumlich justiert, dass die Abstände zwischen den Markierungen und einem Punkt, welcher bezüglich des Maschinenteils ortsfest ist und auf dessen Drehachse liegt, gleich groß sind.

Wie bereits erwähnt, werden die Justiervorgänge so vorgenommen, dass die Abstände zwischen den Markierungen und den entsprechenden Punkten gleich groß sind. Der Begriff "gleich" ist im Zusammenhang mit den Genauigkeiten zu verstehen, wie sie im hier vorliegenden technischen Gebiet üblichen sind. "Gleich" bedeutet selbstredend nicht, dass notwendigerweise bei beliebig genauer Messung die besagten Abstände exakt gleich groß sein müssen. Vielmehr sind hier, wenn auch extrem kleine, Toleranzen zuzulassen. Der normierte Längenunterschied zwischen einem ersten Abstand, ausgehend von einem ersten Markierungspunkt, und einem zweiten Abstand, welcher von einem zweiten Markierungspunkt ausgeht zu dem entsprechenden Punkt soll in einem Bereich von ± 4·10⁻⁴ liegen. Unter dem Begriff normierter Längenunterschied ist die Differenz zweier Abstände bezogen auf einen der Abstände zu verstehen. Häufig können mit vertretbarem Aufwand die entsprechenden normierten Längenunterscheide auch bis auf den Bereich ± 2·10⁻⁵, oder sogar auf ± 0,5·10⁻⁵ reduziert werden.

Wenn das erfindungsgemäße Verfahren abgeschlossen ist, ist der Körper mit der Winkelskalierung präzise montiert, so dass der Anbau die Voraussetzung für eine Winkelmessung hoher Güte erfüllt.

In der Praxis kann der Körper, auf den eine Winkelskalierung aufzubringen ist, nicht ideal rund gefertigt werden. Die Begriffsdefinitionen bezüglich der Rundheitsabweichungen entsprechen hier im Übrigen der DIN ISO 4291 vom September 1987. Beim Anbau, bzw. bei der Montage braucht bei Anwendung des erfindungsgemäßen Verfahrens nicht auf die Rundheitsabweichung des Körpers geachtet werden. Insbesondere ist es nicht notwendig, dass der Mittelpunkt des Kreises der kleinsten Abweichungsquadrate ermittelt werden muss. Überraschenderweise ist eine für den Messzweck bei weitem ausreichend genaue Montage möglich, auch wenn die Drehachse des zu vermessenden Maschinenteils nicht den Mittelpunkt des Kreises der kleinsten Abweichungsquadrate schneidet, oder nicht in unmittelbarer Nähe dazu zu liegen kommt.

Mit Vorteil wird das Aufbringen der Markierungen und / oder der Winkelskalierung mit Hilfe eines Ablationsprozesses, insbesondere einer Laserabladtion durchgeführt. Alternativ dazu kann in diesem Zusammenhang auch ein Lithographieverfahren zum Einsatz kommen.

In einer bevorzugten Ausgestaltung der Erfindung werden die Markierungen und / oder die Winkelskalierung außen auf eine Mantelseite eines zylindrischen, insbesondere eines hohlzylindrischen bzw. ringförmigen, Körpers aufgebracht.

Das erfindungsgemäße Verfahren ist sowohl bei massiven als auch bei relativ schlanken Ringkörpern mit Erfolg einsetzbar, weil dadurch nicht nur die Montage erleichtert wird, sondern auch eine präzisere Justierung erfolgt. Besonders vorteilhaft ist das erfindungsgemäße Verfahren, wenn der Körper als vergleichsweise schlanker Ringkörper ausgeführt ist, weil gerade derartige Ringkörper fertigungsbedingt durch ihre Biegeweichheit eine signifikante Rundheitsabweichung aufweisen. Insbesondere bei Ringkörpern bei denen das Verhältnis des Außendurchmessers zum Innendurchmesser kleiner als 5, insbesondere kleiner als 3, mit Vorteil kleiner als 2 ist, ist das erfindungsgemäße Verfahren besonders vorteilhaft.

Trotz der relativ großen zulässigen Abweichungen von der idealen Geometrie, welche durch das erfindungsgemäße Verfahren beherrschbar sind, sollen die Körper keine beliebig große Rundheitsabweichung aufweisen. In einer bevorzugten Ausführungsform liegt die Rundheitsabweichung ΔZq (gemäß oben genannter DIN ISO 4291) im Bereich der Winkelskalierung des Körpers unter 100 µm, insbesondere unter 50 µm.

Die Erfindung ist nicht auf Körper beschränkt, welche zylindrisch oder ringförmig ausgestaltet sind. Beispielsweise kann der Körper auch als Ringsegment ausgebildet sein, etwa wenn die Drehstellung eines Maschinenteils nicht über eine volle Umdrehung des Maschinenteils gemessen werden muss.

Die Erfindung weist insbesondere den Vorteil auf, dass die Montage für den Anwender eines derartigen Winkelmessgerätes wesentlich vereinfacht ist, so dass der entsprechende Anwender beispielsweise nicht über eine komplexe Montageausrüstung verfügen muss.

Vorteilhafte Ausführungsformen des erfindungsgemäßen Verfahrens sind aus den Maßnahmen in den vom Anspruch 1 abhängigen Ansprüchen zu entnehmen.

Weitere Vorteile, sowie Einzelheiten des erfindungsgemäßen Verfahrens ergeben sich aus der nachfolgenden Beschreibung zweier möglicher Ausführungsbeispiele anhand der beiliegenden Figuren.

### Es zeigen

- Figur 1: eine perspektivische Ansicht eines Körpers auf einem Rundtisch bevor auf diesen eine Winkelskalierung aufgebracht wird,
- Figur 2: eine schematische Draufsicht auf den Körper mit übertrieben dargestellt Rundheitsabweichungen,
- Figur 3: eine perspektivische Ansicht eines Körpers mit einer Winkelskalierung bevor dieser an einem Maschinenteil montiert wird
- Figur 4a: eine Schnittdarstellung eines Körpers mit einem Rundtisch bevor auf diesen eine Winkelskalierung aufgebracht wird, gemäß einem zweiten Ausführungsbeispiel,
- Figur 4b: eine Schnittdarstellung eines Körpers gemäß dem zweiten Ausführungsbeispiel mit einem Rundtisch mit aufgebrachter Winkelskalierung.

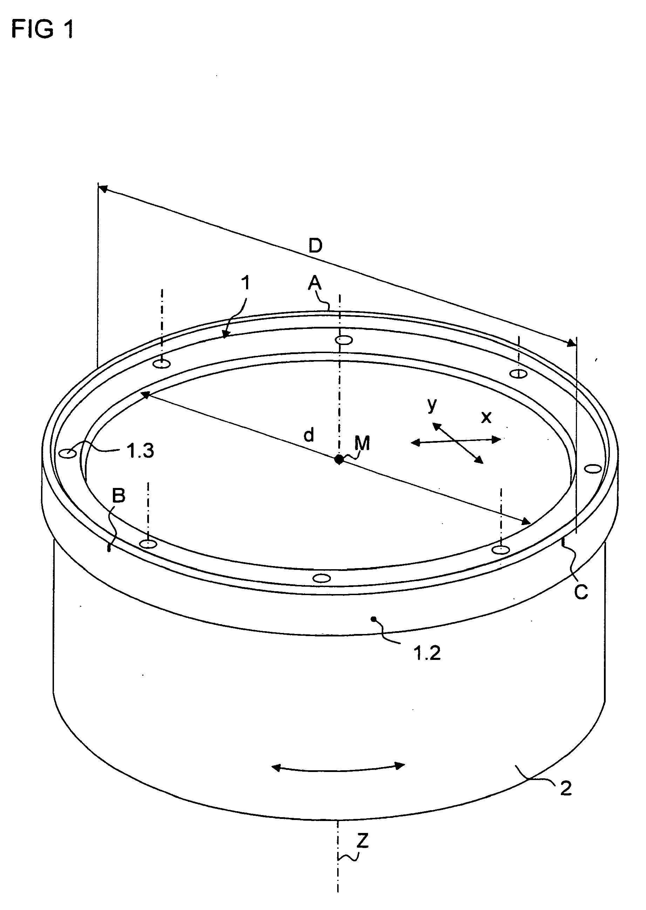

Beim neuen Herstellungsverfahren wird zunächst ein Körper gefertigt, welcher im vorgestellten Ausführungsbeispiel als Ringkörper 1 ausgestaltet ist. Dieser Ringkörper 1 weist gemäß der Figur 1 einen Außendurchmesser D und einen Innendurchmesser d auf. Im vorgestellten Ausführungsbeispiel beträgt der Außendurchmesser D = 250 mm und der Innendurchmesser d = 220 mm. Demnach beträgt hier das Verhältnis D/d = 250/220, also 1,14. Der Ringkörper 1 wird mit Hilfe eines Dreh- oder Schleifverfahrens möglichst präzise gefertigt, so dass die Mantelseite 1.2 eine Rundheitsabweichung von ΔL_{q} = 10 µm (gemäß der Definition in der DIN ISO 4291 vom September 1987) aufweist. Gerade bei Ringkörpern 1, welche im Vergleich zum Außendurchmesser D eine relativ große innere Öffnung aufweisen, also einen großen Innendurchmesser d (D/d vergleichsweise klein), sind die minimal fertigbaren Rundheitsabweichungen begrenzt, weil solche Ringkörper 1 durch ihre schlanke Bauweise leicht verformbar sind. So entstehen beispielsweise schon durch das Spannen derartiger Ringkörper 1 in einer Bearbeitungsmaschine störende Verformungen. Andererseits sind für bestimmte Anwendungen von Winkelmesssystemen, etwa für Pick-and-Place-Maschinen, gerade leichte, und damit auch schlanke, Ringkörper 1 gefordert, damit eine entsprechende Dynamik im Betrieb von z. B. derartiger Pick-and-Place-Maschinen, erreichbar ist.

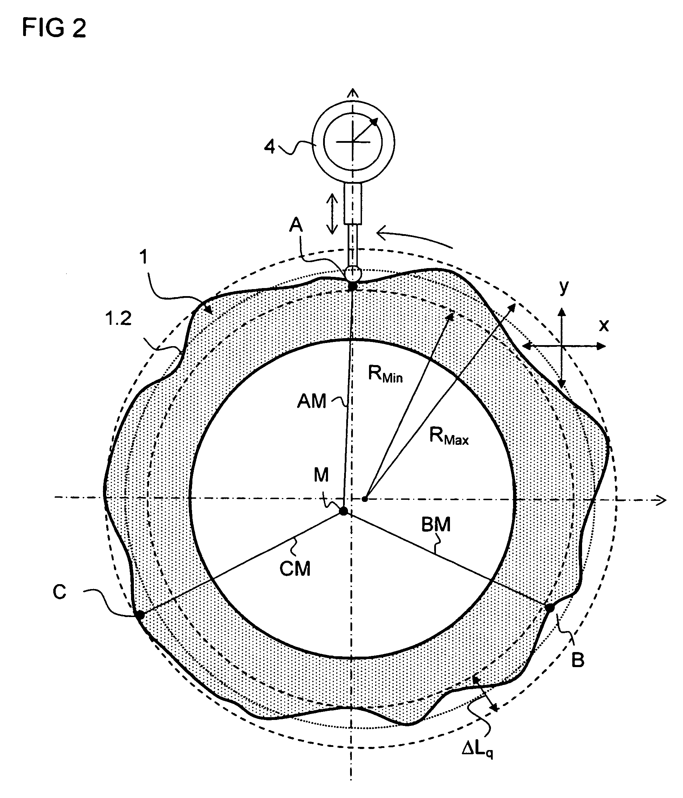

In der Figur 2 ist eine schematische Draufsicht auf den Ringkörper 1 gezeigt, wobei die Formabweichungen der Außenkontur des Ringkörpers 1 übertrieben, das heißt in einem vergrößertem Maßstab, aufgetragen sind. Aus diesem Grund erscheint die Außenkontur bzw. die Mantelseite 1.2 Ringkörpers 1 als gewellte Linie. Diese gewellte Linie verläuft über den gesamten Außenumfang des Ringkörpers 1 zwischen zwei konzentrischen Kreislinien mit den Radien R_{Max}, bzw. R_{Min}. Ausgehend vom Nullpunkt (Schnittpunkt der beiden strichpunktierten dargestellten Achsen), können gemäß der genannten DIN ISO 4291 für verschiedenen Punkte auf der Außenkontur die Rundheitsabweichungen als Differenz zwischen dem größten und kleinsten Radius des gemessenen Profils bestimmt werden. Folglich hüllen den beiden gestrichelten Kreislinien mit den Radien R_{Max} und R_{Min} die Extrema der Außenkontur ein. Zwischen diesen gestrichelten Kreislinien befindet sich eine weitere, gepunktet gezeichnete Kreislinie, die den Kreis der kleinsten Abweichungsquadrate der Außenkontur darstellt. Der Mittelpunkt der beiden zuerst genannten gestrichelten Kreislinien - mit R_{Max} und R_{Min}- ist gleichzeitig auch der Mittelpunkt des Kreises der kleinsten Abweichungsquadrate.

Als nächster Herstellungsschritt wird auf die Mantelseite 1.2 des Ringkörpers 1 eine dünne Ablations-Schicht aufgetragen.

Der mit der beschriebenen Rundheitsabweichung hergestellte Ringkörper 1 wird in einem weiteren Verfahrensschritt auf einen drehbaren luftgelagerten Rundtisch 2, welcher als Trägervorrichtung dient, aufgesetzt (Figur 1). Hierfür werden durch Befestigungsbohrungen 1.3 des Ringkörpers 1 Schrauben in Gewindebohrungen im Rundtisch 2 gedreht. Dabei weisen die Befestigungsbohrungen 1.3 einen etwas größeren Innendurchmesser auf, als die Außendurchmesser der Schrauben. Im ersten Schritt werden die Schrauben nur verhältnismäßig leicht angezogen, so dass eine radial gerichtete Verschiebung des Ringkörpers 1 in der x-y-Ebene relativ zum Rundtisch 2 möglich ist. In diesem Zustand wird die erste Markierung A mit Hilfe eines Laserprozesses auf die Mantelseite 1.2 des Ringkörpers 1 aufgebracht. Sodann wird der luftgelagerte Rundtisch 2 um 120° gedreht und die zweite Markierung B mit dem gleichen Verfahren aufgebracht. Nach einer weiteren Drehung um 120° wird die dritte und letzte Markierung C gesetzt. Es werden also mit Hilfe eines Laserprozesses die drei Markierungen A, B, C auf die Mantelseite 1.2 des Ringkörpers 1 aufgebracht. Die Markierungen A, B, C sind dabei in Umfangsrichtung des Ringkörpers 1 voneinander beabstandet angeordnet. Der genannte Laserprozess wird im vorgestellten Ausführungsbeispiel als Laserablationsprozess vorgenommen. Dabei werden von der Mantelseite 1.2 des Ringkörpers 1 drei vergleichsweise starke Striche als Markierungen A, B, C aus der Ablations-Schicht mit Hilfe eines Laserstrahls einzeln entfernt.

Im nächsten Schritt wir nun die Justierung des Ringkörpers 1 in Bezug auf den Rundtisch 2 vorgenommen. Zu diesem Zweck wird eine Messuhr 4 an die Mantelseite 1.2 im Bereich der Markierung A angesetzt und in diesem Zustand z. B. auf Null gesetzt (Figur 2). Danach wird der Rundtisch 2 um 120° gedreht, so dass die Messuhr 4 im Bereich der Markierung B anliegt dann wird der gemessene Wert festgehalten. Danach wird nach entsprechender weiterer Drehung des Rundtisches 2 der Messwert an der Markierung C bestimmt. Im Zuge der Justiermaßnahmen wird nun der Ringkörper 1 in der x-y-Ebene so verschoben, dass die Messuhr 4 an allen drei Markierungen A, B, C den gleichen Wert anzeigt. Das heißt, dass nunmehr der Ringkörper 1 bezüglich dem Rundtisch 2 in der Weise justiert ist, dass die Abstände AM, BM, CM zwischen den Markierungen A, B, C und einem Punkt M, welcher bezüglich des Rundtisches 2 ortsfest ist, gleich groß sind. Der Punkt M liegt dann auf der Drehachse Z des Rundtisches 2. Dabei muss der Punkt M nicht körperlich auf dem Rundtisch 2 zu liegen kommen. Hier ruht beispielsweise der Punkt M in der Ebene, welche durch die drei Punkte der Markierungen A, B, C aufspannbar ist. Wie aus der Figur 2 zu entnehmen ist, ist im Allgemeinen der Punkt M nicht der Mittelpunkt des Kreises, der durch die kleinsten Abweichungsquadrate der Außenkontur bestimmt werden würde. Denn dieser Mittelpunkt ist derjenige Punkt von dem in der Figur 2 die Pfeile für die Radien R_{Max}, bzw. R_{Min} ausgehen.

Nach dieser Justierung wird nun der Ringkörper 1 in der justierten Position fest auf den Rundtisch 2 geschraubt. Danach wird mit dem Aufbringen einer Winkelskalierung 1.1 direkt auf die beschichtete Mantelseite 1.2 des Ringkörpers 1 begonnen. Hierfür wird wieder der gleiche Laserprozess angewendet, wie er bereits beim Aufbringen der Striche für die Markierungen A, B, C zum Einsatz kam. Es wird also eine Einzelstrichablation vorgenommen, wobei nach jedem erzeugten Teilungsstrich auf dem Ringkörper 1 der Rundtisch 2 minimal weitergedreht wird, so dass der nächste Teilungsstrich aufgebracht werden kann. Überwacht wird dieser Prozess mit Hilfe eines hochgenauem Winkelmesssystems am Rundtisch 2.

Wenn nun die Winkelskalierung 1.1, die aus den einzelnen Teilungsstrichen besteht, vollständig aufgebracht ist, kann der mit der Winkelskalierung 1.1 versehene Ringkörper 1 vom Rundtisch 2 entfernt bzw. demontiert werden. Der Ringkörper 1 mit der Winkelskalierung 1.1, der als ein einstückiges Bauteil vorliegt, kann nun, beispielsweise zusammen mit einer zur Abtastung der Winkelskalierung 1 geeigneten Vorrichtung, als modulares Winkelmesssystem ausgeliefert werden.

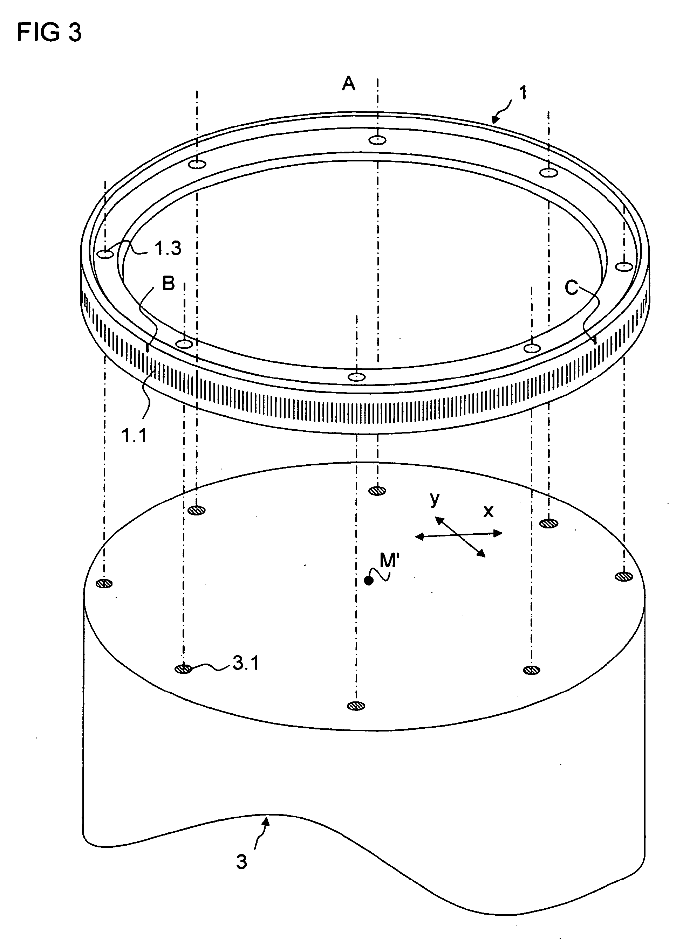

Beim Zusammenbau eines derartigen modularen Winkelmesssystems beim Anwender muss auf ein exakte Montage des Ringkörpers 1 an einem dafür vorgesehenen Maschinenteil, hier an einer Welle 3 (Figur 3), deren Drehwinkel gemessen werden soll, geachtet werden. Im einzelnen wird in dieser Phase zunächst der mit der Winkelskalierung 1.1 versehene Ringkörper 1 auf die Welle 3 aufgesetzt und mit Schrauben, die in Gewindebohrungen 3.1 gedreht werden vorläufig fixiert, so dass unter gewissem Kraftaufwand eine Verschiebung des Ringkörpers 1 in der x-y-Ebene möglich ist. Die Justierung des Ringkörpers 1 relativ zur Welle 3 erfolgt dann analog der Justierung vor dem Aufbringen der Winkelskalierung 1.1, indem eine Messuhr platziert wird und die Welle 3 um ihre Achse gedreht wird. Es wird also eine Messuhr an die Mantelseite 1.2 im Bereich der Markierung A angesetzt und in diesem Zustand z. B. auf Null gesetzt. Danach wird die Welle 3 um 120° gedreht, so dass die Messuhr im Bereich der Markierung B anliegt, dann wird der gemessene Wert festgehalten. Danach wird nach entsprechender weiterer Drehung der Welle 3 der Messwert an der Markierung C bestimmt. Im Zuge der Justiermaßnahmen wird nun der Ringkörper 1 in der x-y-Ebene so verschoben, dass die Messuhr an allen drei Markierungen A, B, C den gleichen Wert anzeigt. Das heißt, dass nunmehr der Ringkörper 1 bezüglich der Welle 3 in der Weise justiert ist, dass die Abstände AM', BM', CM' zwischen den Markierungen A, B, C und einem Punkt M', welcher bezüglich der Welle 3 ortsfest ist, gleich groß sind. Der Punkt M' liegt dann auf der Drehachse der Welle 3.

Auf diese Weise ist ein einfache und präzise Montage des Ringkörpers 1 mit der Winkelskalierung 1.1 möglich, wobei die Zentrierung beim Aufbringen der Winkelskalierung 1.1 weitgehend dem Zustand beim Ablesen der Winkelskalierung 1.1 des Ringkörpers 1 entspricht, wenn dieser im Messbetrieb an der Welle montiert ist. Auch im montierten Zustand des Ringkörpers 1 auf der Welle 3 ist der Punkt M' im Allgemeinen nicht der Mittelpunkt des Kreises, der durch die kleinsten Abweichungsquadrate der Außenkontur bestimmt werden würde. Schließlich kann durch stärkeres Festziehen der Schrauben eine endgültige Fixierung des Ringkörpers 1 auf der Welle 3 erfolgen. Durch die Erfindung ist somit eine überaus einfache Montage möglich, bei der überdies eine hohe Präzision erreicht wird.

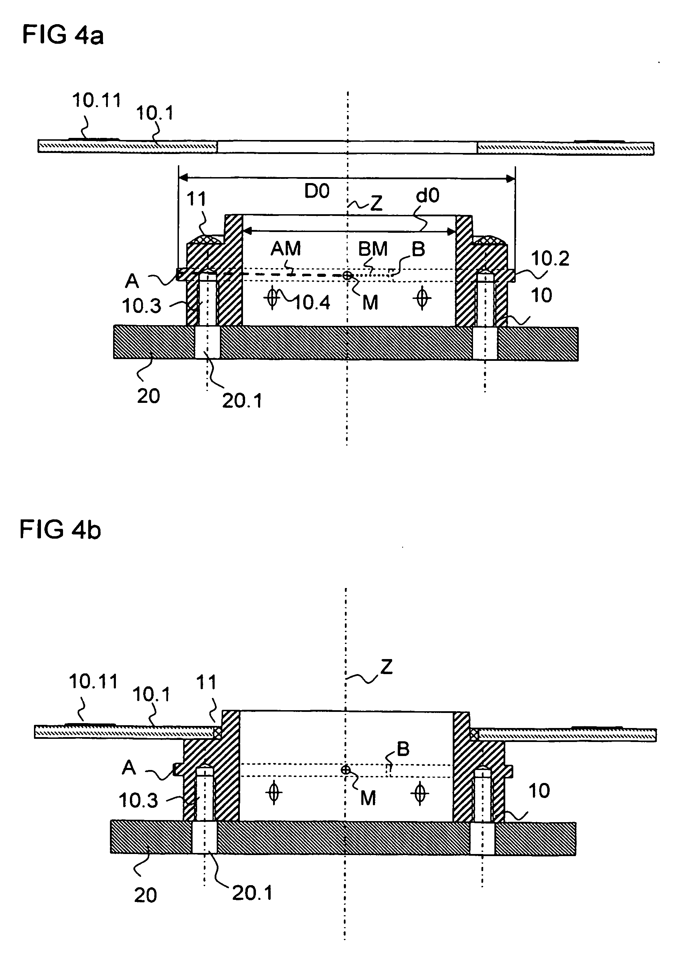

Anhand der Figuren 4a und 4b wird ein zweites Ausführungsbeispiel der Erfindung erläutert. Hier wird zunächst ein Körper gefertigt, der hier als ringförmige Nabe 10 ausgestaltet ist. Im zweiten Ausführungsbeispiel beträgt das Verhältnis von Außendurchmesser D0 zum Innendurchmesser d0 der Nabe 10 D0/d0 = 205 mm/155 mm = 1,3. Trotz einer vergleichsweise präzisen Fertigung der Nabe 10 weist diese zwangsläufig Rundheitsabeichungen auf. Der Außendurchmesser D0 wird an einem umlaufenden Absatz der Nabe 10 bestimmt, wobei der Absatz in radialer Richtung von einer Mantelseite 10.2 begrenzt wird.

Die Nabe 10 wird in einem weiteren Herstellungsschritt auf einen Luftgelagerten Rundtisch 20, der als Trägervorrichtung dient, in der Weise aufgespannt, dass noch eine relative, radial gerichtete, Verschiebung der Nabe 10 gegenüber dem Rundtisch 20 möglich ist. Zu diesem Zweck werden entsprechend durch Löcher 20.1 im Rundtisch 20 Schrauben in Gewindebohrungen 10.3 der Nabe 10 gedreht. Dabei weisen die Löcher 20.1 einen etwas größeren Innendurchmesser auf, als die Außendurchmesser der Schrauben, so dass eine geringfügige Verschiebung der Nabe 10 möglich ist. Auf der Mantelseite 10.2 der Nabe 10 werden nun drei Markierungen A, B, C, welche um jeweils 120° versetzt angeordnet sind aufgebracht. In den Figuren 4a und 4b ist wegen der Schnittdarstellung die Markierung C nicht sichtbar. Die Markierung B befindet sich auf der Mantelseite 10.2 am Außenumfang der Nabe 10 und ist deshalb nicht direkt in den Figuren 4a und 4b sichtbar. Entsprechend ist dort die Markierung B gestrichelt dargestellt.

Danach wird die Nabe 10 relativ zum Rundtisch 20 justiert. Diese Justierung erfolgt analog zum ersten Ausführungsbeispiel. Die Prinzipdarstellung gemäß der Figur 2 kann somit auch als Querschnitt durch die Nabe 10 im Bereich des Absatzes an dem die Markierungen A, B, C aufgebracht sind, betrachtet werden. Die Nabe 10 wird also gegenüber dem Rundtisch 20 solange verschoben, bis die Abstände AM, BM, CM zwischen den Markierungen A, B, C und dem Punkt M, welcher bezüglich des Rundtisches 20 ortsfest ist, gleich groß sind. Der Punkt M liegt dann auf der Drehachse Z des Rundtisches 20. In diesem Ausführungsbeispiel liegt der Punkt M in derjenigen Ebene, in der auch die Punkte der drei Markierungen A, B, C liegen. Danach kann die justierte Nabe 10 durch Festzeihen der Schrauben unverschiebbar gegenüber dem Rundtisch 20 fixiert werden.

Im nächsten Schritt erfolgt das Aufbringen einer Winkelskalierung 10.1 auf die bezüglich des Rundtisches 20 justierte Nabe 10. Im Unterschied zum ersten Ausführungsbeispiel wir nun im zweiten Ausführungsbeispiel die Nabe 10 nicht direkt mit einer Strichteilung beschrieben. Auf die Nabe 10 wird vielmehr nun als Winkelskalierung 10. 1 eine Ringscheibe aufgesetzt, welche bereits mit Teilungsstrichen 10.11 versehen ist. Die Teilungsstriche 10.11 sind dabei radial bezüglich der Ringscheibe ausgerichtete Striche, wobei die Ringscheibe selbst hier aus Glas besteht. Bevor die derart ausgestaltete Winkelskalierung 10.1 auf die Nabe 10 aufgesetzt wird, wurde auf die entsprechende Kontaktfläche an der Nabe 10 ein Kleber 11 aufgetragen. Dieser Kleber 11 hat im vorgestellten Ausführungsbeispiel die Eigenschaft, dass er mit UV-Licht aushärtbar ist. Es wird nun die Winkelskalierung 10.1 bezüglich dem Punkt M bzw. der Drehachse Z des Rundtisches 20 zentriert. Sobald die zentrierte Stellung (bezüglich des Punktes M) der Winkelskalierung 10. 1 eingerichtet ist, kann der Kleber 11 durch UV-Bestrahlung ausgehärtet werden.

Danach wird die mit der Winkelskalierung 10.1 versehene Nabe 10 vom Rundtisch 20 demontiert.

Im Folgenden, wird dann die mit der Winkelskalierung 10.1 versehene Nabe 10 beim Anwender des Winkelmesssystems montiert. Die Montage erfolgt analog zum ersten Ausführungsbeispiel. Es wird also die Nabe 10 an ein Maschinenteil, meistens eine Welle, angebaut, so dass die Abstände zwischen den Markierungen A, B, C und einem Punkt auf der Drehachse des Maschinenteils, welcher bezüglich dem Maschinenteil, bzw. der Welle, ortsfest ist, gleich groß sind. Dabei ist der zum radialen Justieren der Innendurchmesser d0 etwas größer als der Durchmesser der Welle, deren Drehstellung letztlich durch das Winkelmesssystem bestimmt werden soll. In radiale Gewindebohrungen 10.4 in der Nabe 10 können Schrauben eingedreht werden, welche die radiale Justierung im Sinne der gleichen Abstände zwischen den Markierungen A, B, C und einem Punkt auf der Welle erleichtern. Auf diese Weise ist also eine einfache Herstellung und Montage einer Nabe 10 mit einer Winkelskalierung 10.1 möglich.

## Patentansprüche

1. Verfahren zur Herstellung und Montage eines Körpers (1, 10) mit einer Winkelskalierung (1.1, 10.1), mit folgenden Schritten:
■ Aufbringen von mindestens drei Markierungen (A, B, C) auf den Körper (1, 10), wobei die Markierungen (A, B, C) in Umfangsrichtung des Körpers (1, 10) voneinander beabstandet angeordnet werden,
■ Justieren des Körpers (1, 10) bezüglich einer Trägervorrichtung (2, 20) in der Weise, dass die Abstände (AM, BM, CM) zwischen den Markierungen (A, B, C) und einem Punkt (M), welcher bezüglich der Trägervorrichtung (2, 20) ortsfest ist und auf deren Drehachse (Z) liegt, gleich groß sind,
■ Aufbringen einer Winkelskalierung (1.1, 10.1) auf den bezüglich der Trägervorrichtung (2, 20) justierten Körper (1, 10),
■ Demontieren des mit der Winkelskalierung (1.1, 10.1) versehenen Körpers (1, 10) von der Trägervorrichtung (2, 20),
■ Montage des mit der Winkelskalierung (1.1, 10.1) versehenen Körpers (1, 10) an ein Maschinenteil (3) in der Weise, dass die Abstände (AM', BM', CM') zwischen den Markierungen (A, B, C) und einem Punkt (M'), welcher bezüglich dem Maschinenteil (3) ortsfest ist und auf dessen Drehachse liegt, gleich groß sind.

2. Verfahren zur Herstellung und Montage eines Körpers (1) mit einer Winkelskalierung (1.1) gemäß dem Anspruch 1, wobei das Aufbringen der Winkelskalierung (1.1) auf den in der Trägervorrichtung (2) justierten Körper (1) mit Hilfe eines Ablationsprozesses durchgeführt wird.

3. Verfahren zur Herstellung und Montage eines Körpers (1, 10) mit einer Winkelskalierung (1.1, 10.1) gemäß dem Anspruch 1 oder 2, wobei das Aufbringen von mindestens drei Markierungen (A, B, C) mit Hilfe eines Ablationsprozesses durchgeführt wird.

4. Verfahren zur Herstellung und Montage eines Körpers (1, 10) mit einer Winkelskalierung (1.1, 10.1) gemäß einem der Ansprüche 2 oder 3, wobei der Ablationsprozesses ein Laserablations-Prozess ist.

5. Verfahren zur Herstellung und Montage eines Körpers (1) mit einer Winkelskalierung (1.1) gemäß einem der vorhergehenden Ansprüche, wobei der Körper (1) vor dem Aufbringen der Winkelskalierung (1.1) zumindest im Bereich der Winkelskalierung (1.1) beschichtet wird.

6. Verfahren zur Herstellung und Montage eines Körpers (1, 10) mit einer Winkelskalierung (1.1, 10.1) gemäß einem der vorhergehenden Ansprüche, wobei der Körper (1, 10) vor dem Aufbringen der Markierungen (A, B, C) zumindest im Bereich der Markierungen (A, B, C) beschichtet wird.

7. Verfahren zur Herstellung und Montage eines Körpers (1, 10) mit einer Winkelskalierung (1.1, 10.1) gemäß dem Anspruch 5 oder 6, wobei der Körper (1, 10) mit einer Ablations-Schicht beschichtet wird.

8. Verfahren zur Herstellung und Montage eines Körpers (1, 10) mit einer Winkelskalierung (1.1, 10.1) gemäß einem der vorhergehenden Ansprüche, wobei drei Markierungen (A, B, C) in Umfangsrichtung des Körpers (1, 10) um 120° voneinander versetzt angeordnet werden.

9. Verfahren zur Herstellung und Montage eines Körpers (1, 10) mit einer Winkelskalierung (1.1, 10.1) gemäß einem der vorhergehenden Ansprüche, wobei der Körper (1, 10) ringförmig ausgestaltet ist.

10. Verfahren zur Herstellung und Montage eines Körpers (1, 10) mit einer Winkelskalierung (1.1, 10.1) gemäß dem Anspruch 9, wobei der Körper (1, 10) einen Außendurchmesser D und einen Innendurchmesser d aufweist und das Verhältnis D/d kleiner ist als 5.

11. Verfahren zur Herstellung und Montage eines Körpers (1) mit einer Winkeiskalierung (1.1) gemäß einem der vorhergehenden Ansprüche, wobei die Winkelskalierung (1.1) auf der Mantelseite (1.2) des Körpers (1) aufgebracht ist.

12. Verfahren zur Herstellung und Montage eines Körpers (1) mit einer Winkelskalierung (1.1) gemäß dem Anspruch 11, wobei der Körper (1) so hergestellt wird, dass die Rundheitsabweichung ΔZq im Bereich der Winkelskalierung (1.1) des Körpers (1) kleiner ist als 100 µm, insbesondere kleiner ist als 50 µm.

## Claims

1. A method for producing and assembling a body (1, 10) comprising an angle scale (1.1, 10.1) comprising the following steps:
- applying at least three markers (A, B, C) to the body (1, 10), wherein the markers (A, B, C) are arranged so as to be spaced apart from one another in peripheral direction of the body (1, 10),
- adjusting the body (1, 10) relative to a support device (2, 20) in such a manner that the distances (AM, BM, CM) between the markers (A, B, C) and a point (M), which is stationary relative to the support device (2, 20) and which is located on the axis of rotation (Z) thereof, are equal,
- applying an angle scaling (1.1, 10.1) to the body (1, 10), which is adjusted relative to the support device (2, 20),
- disassembling the body (1, 10), which is provided with the angle scaling (1.1, 10.1) from the support device (2, 20),
- assembling the body (1, 10), which is provided with the angle scaling (1.1, 10.1), to a machine part (3) in such a manner that the distances (AM', BM', CM') between the markers (A, B, C) and a point (M'), which is stationary relative to the machine part (3) and which is located on the axis of rotation thereof, are equal.

2. The method for producing and assembling a body (1) comprising an angle scaling (1.1) according to claim 1, wherein the application of the angle scaling (1.1) to the body (1), which is adjusted in the support device (2), is performed by means of an ablation process.

3. The method for producing and assembling a body (1, 10) comprising an angle scaling (1.1, 10.1) according to claim 1 or 2, wherein the application of at least three markers (A, B, C) is performed by means of an ablation process.

4. The method for producing and assembling a body (1, 10) comprising an angle scaling (1.1, 10.1) according to one of claims 2 of 3, wherein the ablation process is a laser ablation process.

5. The method for producing and assembling a body (1) comprising an angle scaling (1.1) according to one of the preceding claims, wherein the body (1) is coated at least in the area of the angle scaling (1.1) prior to the application of the angle scaling (1.1).

6. The method for producing and assembling a body (1, 10) comprising an angle scaling (1.1, 10.1) according to one of the preceding claims, wherein the body (1, 10) is coated at least in the area of the markers (A, B, C) prior to the application of the markers (A, B, C).

7. The method for producing and assembling a body (1, 10) comprising an angle scaling (1.1, 10.1) according to claim 5 or 6, wherein the body (1, 10) is coated with an ablation layer.

8. The method for producing and assembling a body (1, 10) comprising an angle scaling (1.1, 10.1) according to one of the preceding claims, wherein three markers (A, B, C) are arranged so as to be offset from one another by 120° in peripheral direction of the body (1, 10).

9. The method for producing and assembling a body (1, 10) comprising an angle scaling (1.1, 10.1) according to one of the preceding claims, wherein the body (1, 10) is embodied in a ring-shaped manner.

10. The method for producing and assembling a body (1, 10) comprising an angle scaling (1.1, 10.1) according to claim 9, wherein the body (1, 10) encompasses an outer diameter D and an inner diameter d and the ratio D/d is less than 5.

11. The method for producing and assembling a body (1) comprising an angle scaling (1.1) according to one of the preceding claims, wherein the angle scaling (1.1) is applied to the lateral side (1.2) of the body (1).

12. The method for producing and assembling a body (1) comprising an angle scaling (1.1) according to claim 11, wherein the body (1) is produced in such a manner that the roundness deviation ΔZq in the area of the angle scaling (1.1) of the body (1) is less than 100 µm, in particular less than 50 µm.

## Revendications

1. Procédé pour la fabrication et le montage d'un corps (1, 10) avec une graduation d'angle (1.1, 10.1), comprenant les étapes suivantes :
• Application d'au moins trois marquages (A, B, C) sur le corps (1, 10), les marquages (A, B, C) étant disposés de façon espacée les uns des autres en direction du pourtour du corps (1, 10),
• Ajustement du corps (1, 10) par rapport à un dispositif de support (2, 20), de telle manière que les écarts (AM, BM, CM) entre les marquages (A, B, C) et un point (M), fixe par rapport au dispositif de support (2, 20) et situé sur l'axe de rotation (Z) de celui-ci, sont identiques,
• Application d'une graduation d'angle (1.1, 10.1) sur le corps (1, 10) ajusté par rapport au dispositif de support (2, 20),
• Démontage du corps (1, 10) pourvu de la graduation d'angle (1.1, 10.1), par rapport au dispositif de support (2, 20),
• Montage du corps (1, 10) pourvu de la graduation d'angle (1.1, 10.1) sur une pièce de machine (3), de telle manière que les écarts (AM', BM', CM') entre les marquages (A, B, C) et un point (M'), fixe par rapport à la pièce de machine (3) et situé sur l'axe de rotation de celle-ci, sont identiques.

2. Procédé pour la fabrication et le montage d'un corps (1) avec une graduation d'angle (1.1) selon la revendication 1, dans lequel l'application de la graduation d'angle (1.1) sur le corps (1) ajusté dans le dispositif de support (2) est réalisée à l'aide d'un procédé d'ablation.

3. Procédé pour la fabrication et le montage d'un corps (1, 10) avec une graduation d'angle (1.1, 10.1) selon l'une des revendications 1 ou 2, dans lequel l'application d'au moins trois marquages (A, B, C) est réalisée à l'aide d'un procédé d'ablation.

4. Procédé pour la fabrication et le montage d'un corps (1, 10) avec une graduation d'angle (1.1, 10.1) selon l'une des revendications 2 ou 3, dans lequel le procédé d'ablation est un procédé d'ablation au laser.

5. Procédé pour la fabrication et le montage d'un corps (1) avec une graduation d'angle (1.1) selon l'une des revendications précédentes, dans lequel le corps (1) est revêtu, au moins dans la région de la graduation d'angle (1.1), avant l'application de la graduation d'angle (1.1).

6. Procédé pour la fabrication et le montage d'un corps (1, 10) avec une graduation d'angle (1.1, 10.1) selon l'une des revendications précédentes, dans lequel le corps (1, 10) est revêtu, au moins dans la région des marquages (A, B, C), avant l'application des marquages (A, B, C).

7. Procédé pour la fabrication et le montage d'un corps (1, 10) avec une graduation d'angle (1.1, 10.1) selon l'une des revendications 5 ou 6, dans lequel le corps (1, 10) est revêtu d'une couche d'ablation.

8. Procédé pour la fabrication et le montage d'un corps (1, 10) avec une graduation d'angle (1.1, 10.1) selon l'une des revendications précédentes, dans lequel trois marquages (A, B, C) sont disposés en décalage de 120° les uns par rapport aux autres en direction du pourtour du corps (1, 10).

9. Procédé pour la fabrication et le montage d'un corps (1, 10) avec une graduation d'angle (1.1, 10.1) selon l'une des revendications précédentes, dans lequel le corps (1, 10) est conçu en forme d'anneau.

10. Procédé pour la fabrication et le montage d'un corps (1, 10) avec une graduation d'angle (1.1, 10.1) selon la revendication 9, dans lequel le corps (1, 10) présente un diamètre extérieur D et un diamètre intérieur d, le rapport D/d étant inférieur à 5.

11. Procédé pour la fabrication et le montage d'un corps (1) avec une graduation d'angle (1.1) selon l'une des revendications précédentes, dans lequel la graduation d'angle (1.1) est appliquée du côté extérieur (1.2) du corps (1).

12. Procédé pour la fabrication et le montage d'un corps (1) avec une graduation d'angle (1.1) selon la revendication 11, dans lequel le corps (1) est fabriqué de telle sorte, que la déviation de rondeur ΔZq dans la région de la graduation d'angle (1.1) du corps (1) est inférieure à 100 µm, en particulier inférieure à 50 µm.
